# EUROPÄISCHE PATENTSCHRIFT

(11) **EP 3 458 324 B1**
(45) Veröffentlichungstag und Bekanntmachung des Hinweises auf die Patenterteilung: **01.01.2020**
(21) Anmeldenummer: 17723682.5
(22) Anmeldetag: 15.05.2017
(51) Int. Cl.: B60K 5/08

(54) **VERFAHREN ZUR STEUERUNG EINES ANTRIEBSSYSTEMS UND ANTRIEBSSYSTEM**
METHOD FOR CONTROLLING A DRIVE SYSTEM, AND DRIVE SYSTEM
PROCÉDÉ DE COMMANDE D'UN SYSTÈME PROPULSEUR ET SYSTÈME PROPULSEUR

(30) Priorität: 19.05.2016 DE 102016208595
(43) Veröffentlichungstag der Anmeldung: 27.03.2019
(73) Patentinhaber: Bentley Motors Limited, Crewe, Cheshire CW1 3PL (GB)
(72) Erfinder: GRUNER, Steffen, 38542 Leiferde (DE); KACZOR, Benjamin, 38527 Meine (DE); WEISS, Norbert, 38173 Sickte (DE); IBENTHAL, Axel, 38116 Braunschweig (DE)
(74) Vertreter: Wilson Gunn
(86) Internationale Anmeldenummer: PCT/EP2017/061548
(87) Internationale Veröffentlichungsnummer: WO 2017/198582

(56) Entgegenhaltungen:
- EP-A2- 2 151 904
- US-A1- 2013 035 818

## Beschreibung

Die Erfindung betrifft ein Verfahren zur Steuerung eines Antriebssystems mit mindestens zwei Antriebseinheiten, denen jeweils mindestens eine Steuerungseinheit zugeordnet ist. Die Erfindung betrifft weiterhin ein entsprechendes Antriebssystem.

Antriebssysteme von Kraftfahrzeugen werden in Abhängigkeit von äußeren Rahmenbedingungen, wie insbesondere der durch einen Fahrzeugführer vorgegebenen Stellung eines Fahrpedals, mittels mindestens einer Steuerungseinheit, der sogenannten Motorsteuerung, gesteuert.

Aufgrund der stetig zunehmenden Komplexität der Antriebssysteme moderner Kraftfahrzeuge steigt auch der Rechenaufwand, der von den Motorsteuerungen im Betrieb der Antriebssysteme bewältigt werden müssen. Dies gilt insbesondere für solche Antriebssysteme von Kraftfahrzeugen, die mehrere Antriebseinheiten miteinander kombinieren. Ein Beispiel hierfür sind die sogenannten Hybridfahrzeuge, die zumindest einen Verbrennungsmotor und einen elektrischen Antriebsmotoren kombinieren und deren individuelle Antriebsleistungen miteinander koordiniert werden müssen. Insbesondere bei solchen Antriebssystemen kann die Rechenleistung, die insgesamt für die Steuerung der mehreren Antriebseinheiten erforderlich ist, so hoch sein, dass nicht immer eine einzige Motorsteuerung bereitgestellt werden kann, die diese Rechenleistung auch bewältigen kann. Ein Grund hierfür können beispielsweise beengte Platzverhältnisse in einem Motorraum eines entsprechenden Kraftfahrzeugs sein, die die Integration einer ausreichend leistungsfähigen und damit relativ großvolumigen Motorsteuerung nicht erlauben. In der Regel werden daher für Antriebssysteme mit mehreren Antriebseinheiten auch mehrere Steuerungseinheiten, von denen zumindest jeweils eine jeder der Antriebseinheiten zugeordnet ist, eingesetzt und miteinander verknüpft. Dabei kann vorgesehen sein, dass eine der Steuerungseinheiten als Master-Steuerungseinheit dient, die den anderen, häufig als Slave-Steuerungseinheiten bezeichneten Steuerungseinheiten übergeordnet ist.

Die DE 102 422 430 A1 beschreibt beispielsweise ein Verfahren zur Steuerung eines Antriebssystems eines Kraftfahrzeugs, bei dem in Abhängigkeit von einer Fahrpedalstellung ein Summenmoment ermittelt wird, das in einer Momentenschnittstelle in Sollmomente für momentengesteuerte Aggregate aufgeteilt wird, die dann einzelnen Steuergeräten dieser Aggregate übermittelt werden. Bei den momentengesteuerten Aggregaten kann es sich u.a. um eine Brennkraftmaschine und um eine elektrische Antriebseinrichtung handeln.

Weiterhin ist aus der DE 10 2008 041 463 A1 ein Antriebssystem für ein Hybridfahrzeug bekannt, das einen Verbrennungsmotor mit dazugehöriger Motorsteuerung sowie mehrere elektrische Antriebsmotoren mit diesen zugeordneten Steuergeräten umfasst. Eines dieser Steuergeräte ist als Mater-Steuergerät ausgebildet, das eine Momentenanforderung, die von der Motorsteuerung übermittelt wurde, an die weiteren, den elektrischen Antriebsmotoren zugeordneten Steuergeräten weitergibt.

Die DE 10 2010 038 995 A1 offenbart eine Brennkraftmaschine mit zwei Zylinderbänken, denen jeweils ein Steuergerät zugeordnet ist, um den Betrieb der dazugehörigen Zylinderbänke zu steuern. Das einer ersten Zylinderbank zugeordnete Steuergerät dient als Master-Steuergerät, das Vorgaben hinsichtlich einer Abschaltung der zweiten Zylinderbank dem anderen (Slave-)Steuergerät übermittelt.

Die DE 10 2013 208 022 A1 beschreibt ein Hybridfahrzeug, bei dem ein Zurückrollen an einer Steigung primär durch das Aufbringen eines Drehmoments an den Rädern mittels eines elektrischen Traktionsmotors erzielt wird. Überschreitet eine Temperatur des Traktionsmotors oder eines dazugehörigen Stromrichters eine Grenztemperatur, wird der Traktionsmotor abgekoppelt und ein Verbrennungsmotor unter Schlupf mit den Antriebsrädern gekoppelt, um dann anstelle des Traktionsmotors ein Zurückrollen zu verhindern. Ein Steuerungssystem des Hybridfahrzeugs umfasst ein dem Verbrennungsmotor zugeordnetes Steuergerät, ein dem Traktionsmotor zugeordnetes Steuergerät und ein diesen beiden Steuergeräten übergeordnetes Fahrzeugsystemsteuergerät. Die US2013/0035818 A1 beschriebt ein Hybridfahrzeug und ein Verfahren zur Steuerung eines Hybridsystems mit zwei Antriebseinheiten.

Eine Koordination mehrerer miteinander verknüpfter Steuerungseinheiten mit einem gemeinsamen Ziel, nämlich einer Umsetzung eines von einem Fahrer eines Kraftfahrzeugs durch eine bestimmte Stellung eines Fahrpedals zum Ausdruck gebrachten Fahrzustandswunsches unter der notwendigen Berücksichtigung einer Vielzahl von weiteren Parametern, führt regelmäßig zu Fehlern, die zu entsprechenden Fehlermeldungen, einer verminderten Antriebsleistung und/oder einem verminderten Antriebskomfort, den das Antriebssystem bereitstellt, führen können.

Ausgehend von diesem Stand der Technik lag der Erfindung die Aufgabe zugrunde, ein verbessertes Verfahren zur Steuerung eines Antriebssystems mit mindestens zwei

Antriebseinheiten, denen jeweils mindestens eine Steuerungseinheit zugeordnet ist, anzugeben.

Diese Aufgabe wird mittels eines Verfahrens gemäß dem Patentanspruch 1 gelöst. Ein zur Durchführung eines solchen Verfahrens geeignetes Antriebssystem ist Gegenstand des Patentanspruchs 8. Vorteilhafte Ausführungsformen des erfindungsgemäßen Verfahrens und bevorzugter Ausgestaltungen des erfindungsgemäßen Antriebssystems sind Gegenstände der weiteren Patentansprüche und/oder ergeben sich aus der nachfolgenden Beschreibung der Erfindung.

Der Erfindung liegt dabei die Erkenntnis zugrunde, dass sich Probleme bei der Koordination der von einer Master-Steuerungseinheit ausgehend von einem Gesamtsollmoment für die einzelnen Antriebseinheiten beziehungsweise den diesen Antriebseinheiten zugeordneten Steuerungseinheiten ermittelten Einzelsollmomente insbesondere dann einstellen können, wenn eine oder mehrere der Antriebseinheiten situations- beziehungsweise betriebszustandsabhängig nicht in der Lage sind, das diesen zugeordnete Einzelsollmoment auch tatsächlich zu erfüllen, obwohl diese von der Auslegung her dazu eigentlich in der Lage sein sollten.

Als "Grenzmoment" wird folglich das von einer Antriebseinheit in Abhängigkeit von einem aktuellen Betriebszustand maximal erzeugbare Drehmoment verstanden, das aufgrund verschiedener Einflussfaktoren zumindest temporär unterhalb eines absoluten Maximalmoments, das die Antriebseinheit aufgrund ihrer Auslegung erreichen kann, liegen kann. Dabei muss das Grenzmoment nicht dem aktuell von der Antriebseinheit bereitgestellten Istmoment entsprechen. Einflussfaktoren, die zu einem im Vergleich zu einem absoluten Maximalmoment geringeren Grenzmoment führen können, sind beispielsweise relativ niedrige und/oder hohe Umgebungstemperaturen, relativ niedrige und/oder hohe Bauteiltemperaturen, Fehlfunktionen einzelner Komponenten der entsprechenden Antriebseinheit sowie die Betriebsdauer in einem bestimmten Betriebszustand, beispielsweise bei einer Antriebseinheit, die nur temporär mit einer definierten Überlast (Overboost) betrieben werden kann.

Ein erfindungsgemäßes Antriebssystem, das mindestens zwei Antriebseinheiten aufweist, denen jeweils mindestens eine Steuerungseinheit zugeordnet ist, ist dadurch gekennzeichnet, dass eine Master-Steuerungseinheit vorgesehen ist und die Master-Steuerungseinheit sowie die den Antriebseinheiten zugeordneten Steuerungseinheiten derart programmiert sind, dass mittels diesen ein erfindungsgemäßes Verfahren ausführbar ist.

Bei der Master-Steuerungseinheit kann es sich um eine der jeweils einer Antriebseinheit zugeordneten Steuerungseinheiten handeln, die somit integral die Funktion der Master-Steuerungseinheit und der entsprechenden, einer der Antriebseinheiten zugeordneten Steuerungseinheit aufweist. Ebenso besteht die Möglichkeit, neben jeweils mindestens einer jeder der Antriebseinheiten zugeordneten Steuerungseinheit eine diesen Steuerungseinheiten übergeordnete Master-Steuerungseinheit vorzusehen.

Das erfindungsgemäße Verfahren ermöglicht in vorteilhafter Weise einen Betrieb eines erfindungsgemäßen Antriebssystems, bei dem dann, wenn ein für eine Antriebseinheit ermitteltes Einzelsollmoment größer als das dazugehörige Grenzmoment ist, das entsprechende Differenzmoment (d.h. die Differenz zwischen dem ermittelten Einzelsollmoment und dem dazugehörigen Grenzmoment) so weit wie möglich, vorzugsweise vollständig dem Einzelsollmoment der anderen Antriebseinheit (bei mehreren weiteren Antriebseinheiten zumindest einer, mehreren oder allen davon) zugeschlagen wird. Das tatsächlich an die entsprechende, ein relativ geringes Grenzmoment aufweisende Antriebseinheit übermittelte Einzelsollmoment kann dann auf maximal das Grenzmoment beschränkt sein. Dies ist jedoch nicht zwingend erforderlich, weil von der entsprechenden Antriebseinheit in dem entsprechenden Betriebszustand ohnehin kein Istmoment erzeugt werden kann, das größer als das Grenzmoment ist (dies kann dazu führen, dass die Einzelsollmomente, in die das von der Master-Steuerungseinheit berechnete Gesamtsollmoment aufgeteilt wird, in Summe auch größer als dieses Gesamtsollmoment sein können). Auf diese Weise kann vermieden werden, dass sich ein Betrieb einer der Antriebseinheiten mit einem Istmoment, das auf das dazugehörige Grenzmoment beschränkt ist, wobei dieses Grenzmoment temporär unterhalb des von der Master-Steuerungseinheit für diese Antriebseinheit ermittelten Einzelsollmoments liegt, negativ auf das Antriebsverhalten des Antriebssystems insgesamt auswirkt, weil das verminderte begrenzte Istmoment der entsprechenden Antriebseinheit durch die andere(n) Antriebseinheit(en) kompensiert werden kann.

In einer bevorzugten Ausführungsform des erfindungsgemäßen Verfahrens kann weiterhin vorgesehen sein, dass die zu den Antriebseinheiten gehörigen Istmomente ermittelt werden und daraus von der Master-Steuerungseinheit ein Gesamtistmoment ermittelt wird. Ein derart ermitteltes Gesamtistmoment kann dann in vorteilhafter Weise an ein Funktionselement, wie beispielsweise eine Steuerungsvorrichtung für ein elektronisches Stabilitätsprogramm oder eine Steuerungsvorrichtung für ein automatisches Getriebe, übermittelt werden, so dass dessen Funktionalität in Abhängigkeit von dem Gesamtistmoment gesteuert werden kann. Dadurch kann beispielsweise eine hohe Momentenausgabegenauigkeit und somit ein hoher Schaltkomfort eines automatischen Getriebes erreicht werden.

Ein solches Vorgehen kann sich insbesondere dann vorteilhaft auswirken, wenn, wie vorzugsweise vorgesehen, das Gesamtsollmoment in Abhängigkeit eines Parameters, der von dem Funktionselement an die Master-Steuerungseinheit übermittelt wird, ermittelt wird. Dadurch kann insbesondere eine möglichst optimale Aufteilung des ermittelten Gesamtsollmoments in die den einzelnen Antriebseinheiten zugeordneten Einzelsollmomente realisiert werden.

Ein erfindungsgemäßes Verfahren kann insbesondere vorteilhaft bei einem Antriebssystem umgesetzt werden, das mindestens einen Verbrennungsmotor als Antriebseinheit und mindestens einen Elektromotor als weitere Antriebseinheit umfasst. Ein solches hybrides Antriebssystem bedingt nicht nur einen erheblichen rechnerischen Steuerungsaufwand, der vorteilhaft durch mehrere verknüpfte Steuerungseinheiten bewältigt werden kann, sondern ermöglicht auch in besonders vorteilhafter Weise eine Kompensation eines Differenzmoment einer Antriebseinheit, deren Grenzmoment geringer als das diesen zugeordnete Einzelsollmoment ist, durch die entsprechende andere Antriebseinheit.

Weitgehend unproblematisch kann ein von den Teilmotoren insgesamt erzeugtes Istmoment insbesondere dann sein, wenn, wie in einer bevorzugten Ausgestaltung des erfindungsgemäßen Antriebssystems vorgesehen, sowohl ein Verbrennungsmotoren mit mehreren, jeweils als Antriebseinheit geltenden Teilmotoren sowie zusätzlich mindestens ein als Antriebseinheit dienender Elektromotor vorgesehen sind, weil eine solche Ausgestaltung des Antriebssystems ermöglicht, die Reduzierung des von den Teilmotoren insgesamt erzeugten Istmoments durch den Elektromotor kompensieren zu lassen. Demnach kann in einer bevorzugten Ausführungsform eines erfindungsgemäßen Verfahrens zur Steuerung eines solchen Antriebssystems vorgesehen sein, dass dann, wenn das für einen ersten Teilmotor ermittelte Einzelsollmoment größer als das dazugehörige Grenzmoment ist, das für einen zweiten Teilmotor ermittelte oder zu ermittelnde Einzelsollmoment auf das Grenzmoment des ersten Teilmotors reduziert oder beschränkt wird, die Summe der Differenzmomente des oder der Teilmotoren so weit wie möglich, vorzugsweise vollständig dem Einzelsollmoment des Elektromotors zugeschlagen wird.

Die Erfindung betrifft weiterhin ein Computerprogramm mit einem Programmcode zum Ausführen eines erfindungsgemäßen Verfahrens, wenn das Computerprogramm auf einem Computer ausgeführt wird.

Die unbestimmten Artikel ("ein", "eine", "einer" und "eines"), insbesondere in den Patentansprüchen und in der die Patentansprüche allgemein erläuternden Beschreibung, sind als solche und nicht als Zahlwörter zu verstehen. Entsprechend damit konkretisierte Komponenten sind somit so zu verstehen, dass diese mindestens einmal vorhanden sind und mehrfach vorhanden sein können.

Die vorliegende Erfindung wird nachfolgend anhand eines in der Zeichnung dargestellten Ausführungsbeispiels näher erläutert. In der Zeichnung zeigt:

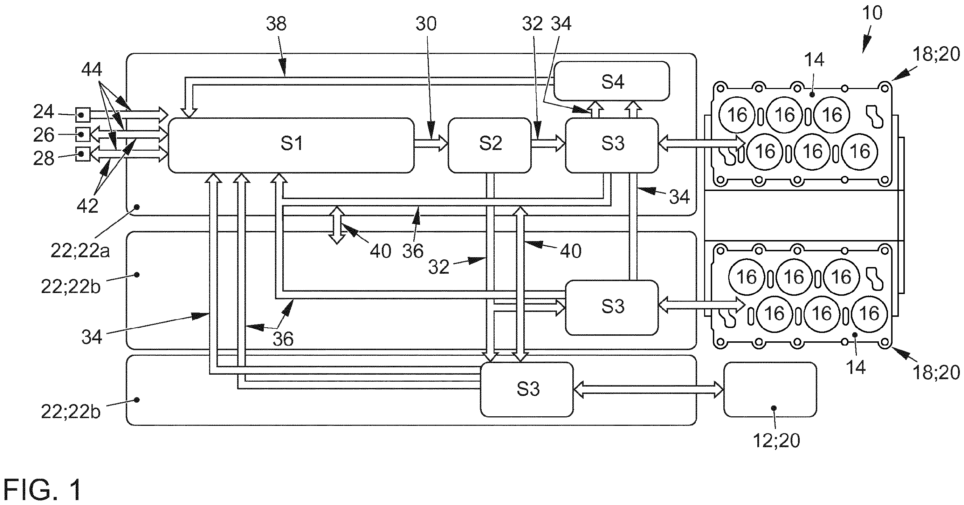

- Fig. 1:: in schematischer Darstellung die Durchführung eines erfindungsgemäßen Verfahrens bei einem erfindungsgemäßen Antriebssystem.

Die Fig. 1 zeigt ein erfindungsgemäßes Antriebssystem mit einem Verbrennungsmotor 10 und einem als Antriebsmotor vorgesehenen Elektromotor 12. Das Antriebssystem kann zum Antrieb eines im Übrigen nicht dargestellten hybriden Kraftfahrzeugs vorgesehen sein, bei dem sowohl der Verbrennungsmotor 10 als auch der Elektromotor 12 (alternativ oder in Kombination) die für den Vortrieb des Kraftfahrzeugs erforderliche Antriebsleistung bereitstellen können. Die Fig. 1 zeigt zudem verschiedene Schritte im Rahmen der Durchführung eines erfindungsgemäßen Verfahrens zur Steuerung des Antriebssystems.

Der Verbrennungsmotor 10 ist in bekannter Weise als ein beispielsweise nach dem Diesel- oder Otto-Prinzip betriebener Hubkolbenmotor ausgebildet, wobei dieser insgesamt zwölf Zylinder 16 aufweist, die in einer sogenannten W-Anordnung angeordnet sind. Demnach bildet der Verbrennungsmotor 10 zwei Zylinderbänke 14 mit jeweils sechs Zylindern 16 aus, die in zwei zueinander versetzten Reihen angeordnet sind und demnach eine enge V-Anordnung aufweisen. Die beiden Zylinderbänke 14 und diesen zugeordnete weitere Funktionskomponenten (nicht dargestellt), insbesondere die Gaswechselventilsysteme ausbildenden Komponenten (Einlassventile, Auslassventile und Ventiltriebe), des Verbrennungsmotors bilden jeweils einen Teilmotor 18 aus, wobei die Teilmotoren 18, ebenso wie der Elektromotor 12, jeweils eine Antriebseinheit 20 des erfindungsgemäßen Antriebssystems darstellen.

Jeder dieser Antriebseinheiten 20 ist eine Steuerungseinheit 22 zugeordnet, wobei diejenige Steuerungseinheit 22, die einem ersten der Teilmotoren 18 des Verbrennungsmotors 10 (in der Fig. 1 dem oberen der Teilmotoren 18) zugeordnet ist, als Master-Steuerungseinheit 22a vorgesehen und ausgebildet ist.

Bei der Durchführung eines erfindungsgemäßen Verfahrens zur Steuerung des Antriebssystems ist vorgesehen, dass von der Meister-Steuerungseinheit 22a in einem Verfahrensschritt S1 ein Wert für ein Gesamtsollmoment 30 berechnet wird, das von dem Antriebssystem für den Antrieb des Kraftfahrzeugs zur Verfügung gestellt werden soll. Diese Berechnung eines Gesamtsollmoments 30 erfolgt zum einen in Abhängigkeit von einem Signal 44, das die Stellung eines von einem Fahrer des Kraftfahrzeugs betätigten Fahrpedals 24 signalisiert, weiterhin in Abhängigkeit von einem Signal 44, das einen erfolgenden oder nicht erfolgenden Eingriff eines von einer Steuervorrichtung 26 gesteuerten elektrischen Stabilitätsprogramms signalisiert, sowie in Abhängigkeit von einem Signal 44, das den Schalt- und sonstigen Betriebszustand eines manuellen oder automatischen Schaltgetriebes 28 signalisiert
Bei einem elektrischen Stabilitätsprogramms handelt es sich um eine steuerungstechnische Beeinflussung der Bremsen und gegebenenfalls auch des Antriebsmoments der individuellen Räder des Kraftfahrzeugs mit dem Ziel einer Fahrstabilisierung. Das Schaltgetriebe 28 dient dazu, die Antriebsdrehzahl und damit das Antriebsmoment von der oder den Abtriebswellen des Verbrennungsmotors 10 und/oder des Elektromotors 12 in verschiedenen alternativen Übersetzungsstufen auf die Antriebsräder des Kraftfahrzeugs zu übertragen.

Von der Master-Steuerungseinheit 22a wird in einem weiteren Verfahrensschritt S2 der berechnete Wert für das Gesamtsollmoment 30 in Werte für Einzelsollmomente 32, die den drei Antriebseinheiten 20 zugeordnet werden, aufgeteilt und die entsprechenden Werte an die weiteren (Slave-)Steuerungseinheiten 22b übertragen. Alle drei Steuerungseinheiten 22 bewirken dann auf Basis dieser Werte für die Einzelsollmomente 32 eine Ansteuerung von Aktoren (nicht dargestellt) der Antriebseinheiten. Bei den entsprechenden Aktoren der beiden Teilmotoren 18 des Verbrennungsmotors 10 kann es sich beispielsweise um Kraftstoffinjektoren, eine in jeweils einen Frischgasstrang (nicht dargestellte) der Teilmotoren 18 integrierte Regelklappe (Drosselklappe), eine Phasenstell-und/oder Nockenumschaltvorrichtung eines Ventiltriebs und/oder um eine Vorrichtung zur Beeinflussung der Durchströmung eines Verdichters und/oder einer Turbine eines Abgasturboladers, beispielsweise in Form einer sogenannten VTG-Vorrichtung, handeln. Ein entsprechender Aktor für den Elektromotor 12 kann beispielsweise ein Spannungsregler sein, durch den der Elektromotor 12 in geregelter Weise mit elektrischer Spannung beaufschlagt wird.

Die Antriebseinheiten 20 sind weiterhin mit einer Vielzahl von Sensoren (nicht dargestellt) versehen, die der Ermittlung von für die Antriebseinheiten spezifischen Betriebsparametern dienen. Beispiele für entsprechende Sensoren, die bei den Teilmotoren 18 des Verbrennungsmotors 10 zum Einsatz kommen können, sind: Drehzahlsensoren, Lage- und Positionssensoren, beispielsweise für eine in einen Frischgasstrang integrierte Regelklappe (Drosselklappe), Zylinderdrucksensoren, Temperatursensoren und Strömungsmesssensoren, wie beispielsweise ein thermoelektrisches Anemometer. Beispiele für entsprechende Sensoren, die bei dem Elektromotor 12 zum Einsatz kommen können, sind: Drehzahlsensoren und Temperatursensoren.

Die den einzelnen Antriebseinheiten 20 zugeordneten Sensoren übermitteln ihre Messwerte an die dazugehörigen Steuerungseinheiten 22, die diese in einem weiteren Verfahrensschritt S3 auswerten und daraus jeweils einen Wert für ein Grenzmoment 34 der dazugehörigen Antriebseinheit 22 ableiten. Bei den Grenzmomenten handelt es sich um die von den aktuellen Betriebsbedingungen abhängigen Drehmomente, die von den einzelnen Antriebseinheiten 20 maximal erzeugt werden können. Die Werte dieser Grenzmomente 34 werden von den beiden Slave-Steuerungseinheiten 22b an die Master-Steuerungseinheit 22a übermittelt und, ebenso wie der Wert für das Grenzmoment der dem Master-Steuergerät 22a zugeordneten Antriebseinheit 20, bei einer nachfolgenden Aufteilung eines berechneten Gesamtsollmoments 30 in den einzelnen Antriebseinheiten 20 zugeordnete Einzelsollmomente 32 berücksichtigt. Gleiches ist für Werte vorgesehen, die die von den einzelnen Antriebseinheiten 20 tatsächlich erzeugten Istmomente 36 quantifizieren.

Aus der Summe der Istmomente 36 kann von der Motorsteuerung ein Gesamtistmoment 42 ermittelt werden, das an die Steuervorrichtung 26 des elektronischen Stabilitätsprogramms und/oder an das Schaltgetriebe 28 (insbesondere bei einer Ausgestaltung als automatisches Schaltgetriebe 28) beziehungsweise an eine Steuerungsvorrichtung dieses Schaltgetriebes 28 übertragen werden, um für einen angepassten Betrieb des elektronischen Stabilitätsprogramms und/oder des Schaltgetriebes 28 genutzt zu werden.

Bei der Übertragung der Werte für die Grenzmomente 34 der Teilmotoren 18 des Verbrennungsmotors 10 kann vorgesehen sein, dass diese in einem weiteren Schritt S4 zu einem Gesamtgrenzmoment 38 des Verbrennungsmotors 10 verknüpft werden, bevor diese bei der Aufteilung des Gesamtsollmoments 30 in die Einzelsollmomente 32 berücksichtigt werden.

Eine Datenübertragung 40 zwischen den Steuerungseinheiten 22 kann beispielsweise mittels eines CAN-Buses erfolgen.

### Bezugszeichenliste

- 10: Verbrennungsmotor
- 12: Elektromotor
- 14: Zylinderbank
- 16: Zylinder
- 18: Teilmotor
- 20: Antriebseinheit
- 22: Steuerungseinheit
- 22a: Master-Steuerungseinheit
- 22b: Slave-Steuerungseinheit
- 24: Fahrpedal
- 26: Steuervorrichtung
- 28: Schaltgetriebe
- 30: Gesamtsollmoment
- 32: Einzelsollmoment
- 34: Grenzmoment
- 36: Istmoment
- 38: Gesamtgrenzmoment
- 40: Datenübertragung
- 42: Gesamtistmoment
- 44: Signale

## Patentansprüche

1. Verfahren zur Steuerung eines Antriebssystems mit mindestens zwei Antriebseinheiten (20), denen jeweils mindestens eine Steuerungseinheit (22) zugeordnet ist, wobei
- mittels einer Master-Steuerungseinheit (22a) ein Gesamtsollmoment (30) berechnet wird,
- das Gesamtsollmoment (30) von der Master-Steuerungseinheit (22a) in jeweils ein Einzelsollmoment (32) für jede der Antriebseinheiten (20) aufgeteilt wird und
- die Antriebseinheiten (20) von den diesen zugeordneten Steuerungseinheiten (22) in Abhängigkeit von den dazugehörigen Einzelsollmomenten (32) angesteuert werden,
**dadurch gekennzeichnet, dass** die zu den Antriebseinheiten (20) gehörigen Grenzmomente (34) ermittelt und von der Master-Steuerungseinheit (22a) bei der Aufteilung des Gesamtsollmoments (30) berücksichtigt werden;
dass das Verfahren bei einem Antriebssystem mit einem Verbrennungsmotor (10) umgesetzt ist, der in mehrere, jeweils eine Antriebseinheit (20) darstellende Teilmotoren (18) unterteilt ist, denen jeweils eine Steuerungseinheit (22) zugeordnet ist; und
dass, wenn das für einen ersten Teilmotor (18) ermittelte Einzelsollmoment (32) größer als das dazugehörige Grenzmoment (34) ist, das für einen zweiten Teilmotor (18) ermittelte oder zu ermittelnde Einzelsollmoment (32) auf das Grenzmoment (34) des ersten Teilmotors reduziert oder beschränkt wird.

2. Verfahren gemäß Anspruch 1, **dadurch gekennzeichnet, dass** dann, wenn ein für eine Antriebseinheit (20) ermitteltes Einzelsollmoment (32) größer als das dazugehörige Grenzmoment (34) ist, das entsprechende Differenzmoment so weit wie möglich dem ermittelten Einzelsollmoment (32) der anderen Antriebseinheit zugeschlagen wird.

3. Verfahren gemäß einem der vorhergehenden Ansprüche, **dadurch gekennzeichnet, dass** die zu den Antriebseinheiten (20) gehörigen Istmomente (36) ermittelt werden und daraus von der Master-Steuerungseinheit (22a) ein Gesamtistmoment (42) ermittelt wird.

4. Verfahren gemäß Anspruch 3, **dadurch gekennzeichnet, dass** das Gesamtistmoment (42) an ein Funktionselement übermittelt wird, dessen Funktionalität in Abhängigkeit von dem Gesamtistmoment (42) gesteuert wird.

5. Verfahren gemäß Anspruch 4, **dadurch gekennzeichnet, dass** das Gesamtsollmoment (30) in Abhängigkeit eines Parameters, der von dem Funktionselement an die Master-Steuerungseinheit (22a) übermittelt wird, ermittelt wird.

6. Verfahren gemäß einem der vorhergehenden Ansprüche, **gekennzeichnet durch** die Umsetzung bei einem Antriebssystem mit einem Verbrennungsmotor (10), der in mehrere, jeweils als Antriebseinheit geltende Teilmotoren unterteilt ist, als Antriebseinheit (20) und zusätzlich einem Elektromotor (12) als Antriebseinheit (20).

7. Verfahren gemäß Anspruch 2, **dadurch gekennzeichnet, dass** dann, wenn das für einen ersten Teilmotor (18) ermittelte Einzelsollmoment (32) größer als das dazugehörige Grenzmoment (34) ist, das für einen zweiten Teilmotor (18) ermittelte oder zu ermittelnde Einzelsollmoment (32) auf das Grenzmoment (34) des ersten Teilmotors (18) reduziert oder beschränkt wird und die Summe der Differenzmomente der Teilmotoren (18) so weit wie möglich dem Einzelsollmoment (32) des Elektromotors (12) zugeschlagen wird.

8. Antriebssystem mit mindestens zwei Antriebseinheiten (20), denen jeweils mindestens eine Steuerungseinheit (22) zugeordnet ist, wobei das Antriebssystem einen Verbrennungsmotor (10) umfasst, der in mehrere, jeweils eine Antriebseinheit (20) darstellende Teilmotoren (18) unterteilt ist, denen jeweils eine Steuerungseinheit (22) zugeordnet ist, **dadurch gekennzeichnet, dass** eine Master-Steuerungseinheit (22a) vorgesehen ist und die Master-Steuerungseinheit (22a) sowie die den Antriebseinheiten (20) zugeordneten Steuerungseinheit (22) derart programmiert sind, dass mittels diesen ein Verfahren gemäß einem der vorhergehenden Ansprüche ausführbar ist.

9. Antriebssystem gemäß Anspruch 8, **gekennzeichnet durch** einen Verbrennungsmotor (10) als Antriebseinheit (20) und einen Elektromotor (12) als Antriebseinheit (20).

## Claims

1. Method for controlling a drive system with at least two drive units (20), each of which is paired with at least one control unit (22), wherein
- a total target torque (30) is calculated by a master control unit (22a),
- the total target torque (30) is subdivided by the master control unit (22a) into a respective individual target torque (32) for each of the drive units (20) and
- the drive units (20) are controlled by the control units (22) assigned to them on the basis of the associated individual target torques (32),
**characterised in that** the threshold torques (34) for each of the drive units (20) are determined and are taken into account by the master control unit (22a) in the apportionment of the total target torque (30),
**in that** the method is implemented in a drive system with an internal combustion engine (10), which is sub-divided into a plurality of sub-engines (18), each representing a drive unit (20), to which a control unit (22) is assigned, and
**in that** when the individual target torque (32) determined for a first sub-engine (18) exceeds the associated threshold torque (34), the individual target torque (32) determined or to be determined for a second engine section (18) is reduced or limited to the threshold torque (34) of the first sub-engine.

2. Method in accordance with claim 1, **characterised in that**, if an individual target torque (32) determined for a drive unit (20) exceeds the associated threshold torque (34), the corresponding torque difference is added, as far as is possible, to the determined individual target torque (32) of the other drive unit.

3. Method in accordance with one of the preceding claims, **characterised in that** the actual torques (36) associated with the drive units (20) are determined and a total actual torque (42) is determined from them by the master control unit (22a).

4. Method in accordance with claim 3, **characterised in that** the total actual torque (42) is transmitted to a functional element, whose functionality is controlled according to the total actual torque (42).

5. Method in accordance with claim 4, **characterised in that** the total target torque (30) is determined as a function of a parameter which is transmitted by the function element to the master control unit (22a).

6. Method in accordance with one of the preceding claims, **characterised by** the implementation of a drive system with an internal combustion engine (10) which is sub-divided into a number of sub-engines, each of which qualifies as a drive unit (20) and additionally an electric motor (12) as drive unit (20).

7. Method in accordance with claim 2, **characterised in that**, if the individual target torque (32) determined for a first engine section (18) exceeds the associated threshold torque (34), the individual target torque (32) determined or to be determined for a second sub-engine (18) is reduced or restricted to the threshold torque (34) of the first sub-engine (18) and the total of the torque differences of the sub-engines (18) is added, so far as possible, to the individual target torque (32) of the electric motor (12).

8. Drive system with at least two drive units (20), each of which is paired with at least one control unit (22), the drive system comprising an internal combustion engine (10), which is sub-divided into several sub-engines (18), each comprising a drive unit (20) and each associated with a control unit (22) and **characterised in that** a master control unit (22a) is provided and the master control unit (22a) and the control unit (22) associated with the drive units (20) are programmed so that a method in accordance with one of the preceding claims may be executed by means of them.

9. Drive system in accordance with claim 8, **characterised by** a combustion engine (10) as drive unit (20) and an electric motor (12) as drive unit (20).

## Revendications

1. Procédé de commande d'un système de propulsion, ayant au moins deux unités (20) de propulsion, auxquelles est associée, respectivement, au moins une unité (22) de commande, dans lequel,
- au moyen d'une unité (22a) de commande maître, on calcule un couple (30) de consigne total,
- on répartit le couple (30) de consigne total par l'unité (22a) de commande maître en, respectivement, un couple (32) de consigne individuel pour chacune des unités (20) de propulsion et
- on commande, en fonction des couples (32) de consigne individuels qui leur appartiennent, les unités (20) de propulsion par les unités (22) de commande qui leur sont associées,
**caractérisé en ce que** l'on détermine les couples (34) limites, qui appartiennent aux unités (20) de propulsion, et il en est tenu compte par l'unité (22a) de commande maître lors de la répartition du couple (30) de consigne total ;
**en ce que** le procédé est mis en œuvre dans un système de propulsion ayant un moteur (10) à combustion interne, qui est subdivisé en plusieurs moteurs (18) partiels, représentant chacun une unité (20) de propulsion, auxquels est associée, respectivement, une unité (22) de commande et **en ce que**, si le couple (32) de consigne individuel, déterminé pour un premier moteur (18) partiel, est plus grand que le couple (34) limite, qui lui appartient, on réduit et on limite le couple (32) de consigne individuel, déterminé ou à déterminer, pour un deuxième moteur (18) partiel, au couple (34) limite du premier moteur partiel.

2. Procédé suivant la revendication 1, **caractérisé en ce que**, si un couple (32) de consigne individuel déterminé pour une unité (20) de propulsion, est plus grand que le couple (34) limite, qui lui appartient, on ajoute le couple de différence correspondant, autant que possible, au couple (32) de consigne individuel déterminé de l'autre unité de propulsion.

3. Procédé suivant l'une des revendications précédentes, **caractérisé en ce que** l'on détermine les couples (36) réels appartenant aux unités (20) de propulsion et on en détermine un couple (42) réel total par l'unité (22a) de commande maître.

4. Procédé suivant la revendication 3, **caractérisé en ce que** l'on transmet le couple (42) réel total à un élément fonctionnel, dont on commande la fonctionnalité en fonction du couple (42) réel total.

5. Procédé suivant la revendication 1, **caractérisé en ce que** l'on détermine le couple (30) de consigne total en fonction d'un paramètre transmis par l'élément fonctionnel à l'unité (22a) de commande maître.

6. Procédé suivant l'une des revendications précédentes, **caractérisé par** la mise en œuvre, dans un système de propulsion ayant un moteur (10) à combustion interne, qui est subdivisé en plusieurs moteurs partiels valant chacun comme unité de propulsion, comme unité (20) de propulsion et, en outre, dans un moteur (12) électrique comme unité (20) de propulsion.

7. Procédé suivant la revendication 2, **caractérisé en ce que**, si le couple (32) de consigne individuel, déterminé pour un premier moteur (18) partiel, est plus grand que le couple (34) limite lui appartenant, on réduit ou on limite le couple (32) de consigne individuel, déterminé ou à déterminer pour un deuxième moteur (18) partiel, et on ajoute la somme des couples de différence des moteurs (18) partiels, autant que possible, au couple (32) de consigne individuel du moteur (12) électrique.

8. Système de propulsion, comprenant au moins deux unités (20) de propulsion, auxquelles est associée, respectivement, au moins une unité (22) de commande, le système de propulsion comprenant un moteur (10) à combustion interne, qui est subdivisé en plusieurs moteurs (18) partiels, représentant chacun une unité (20) de propulsion, auxquels est associée, respectivement, une unité (22) de commande, **caractérisé en ce qu'**il est prévu une unité (22a) de commande maître et l'unité (22a) de commande maître, ainsi que les unités (22) de commande associées aux unités (20) de propulsion sont programmées de manière à pouvoir réaliser, au moyen de celles-ci, un procédé suivant l'une des revendications précédentes.

9. Système de propulsion suivant la revendication 8, **caractérisé par** un moteur (10) à combustion interne, comme unité (20) de propulsion, et par un moteur (12) électrique, comme unité (20) de propulsion.
